# EUROPÄISCHE PATENTSCHRIFT

(11) **EP 0 289 770 B1**
(45) Veröffentlichungstag und Bekanntmachung des Hinweises auf die Patenterteilung: **28.07.1993**
(21) Anmeldenummer: 88104710.4
(22) Anmeldetag: 24.03.1988
(51) Int. Cl.: F15B 13/04, F16K 11/07, F16K 11/085

(54) **Mehrwegeventil**
Directional multiway valve
Distributeur à plusieurs voies

(30) Priorität: 02.05.1987 DE 3714691
(43) Veröffentlichungstag der Anmeldung: 09.11.1988
(73) Patentinhaber: Backé, Wolfgang, Prof. Dr.-Ing., D-52072 Aachen (DE); Kolvenbach, Heiner, Dr.-Ing., D-52066 Aachen (DE)
(72) Erfinder: Backé, Wolfgang, Prof. Dr.-Ing., D-52072 Aachen (DE); Kolvenbach, Heiner, Dr.-Ing., D-52066 Aachen (DE)
(74) Vertreter: Rauh, Wolfgang Kurt

(56) Entgegenhaltungen:
- FR-A- 966 043
- FR-A- 1 565 901
- GB-A- 771 562
- GB-A- 992 977
- US-A- 2 106 572
- US-A- 3 591 135
- THE INSTITUTION OF MECHANICAL ENGINEERS, Band 181, Teil 1, Nr. 4, Seiten 75-88, William Clowes and Sons, Ltd, London and Beccles, GB; M.H. LORENZ et al.: "Oil hydraulic spool valve operating times"

## Beschreibung

Die Erfindung betrifft ein Stetig-Wegeventil zur Einstellung vorbestimmter Volumenströme oder Drücke in hydraulischen oder pneumatischen Steuer- und/oder Regelsystemen zur direkten, schnellen, genauen und stufenlosen Steuerung fluidischer Leistungen, in seiner Ausführung als Drehschieberventil, bestehend aus einem zylindrischen Gehäuse mit einer Vielzahl von in seiner Mantelfläche befindlichen Zu- und Abgangsöffnungen sowie einem im Gehäuse bewegbaren, angetriebenen, Stellglied mit in seiner Mantelfläche befindlichen Einrichtungen zur wahlweisen Verbindung der Zu- und Abgangsöffnungen des Gehäuses einerseits und als Linearschieberventil andererseits, bestehend aus einem gehäuse mit einer Vielzahl von Zu- und Abgangsöffnungen sowie einem im Gehäuse bewegbaren, als dünnwandiger Hohlkörper ausgebildeten Stellglied mit Einrichtungen zur wahlweisen Verbindung der Zu- und Abgangsöffnungen des Gehäuses.

Stetig-Wegeventile, insbesondere auch Servoventile, dienen in der Fluidtechnik der Einstellung vorbestimmter Volumenströme oder Drücke, z.B. in der Handhabungstechnik, wo neben elektrischen auch hydraulische oder pneumatische freipositionierbare Antriebe eingesetzt werden.

Derartige Antriebe weisen meist einen Linearantrieb (Zylinder) auf, dessen Verdrängerräume über stetige Ventile mit dem Druckmedium versorgt werden. Durch Zufuhr unterschiedlicher Volumenströme lassen sich unterschiedliche Hubgeschwindigkeiten erzielen. Bei federabgestützten Zylindern wird durch Aufbringen eines bestimmten Druckes eine bestimmte Position angefahren. Hierbei sorgen stetige Ventile für die Einhaltung des geforderten Druckes.

An Stetig-Wegeventile werden im allgemeinen hohe Anforderungen hinsichtlich der Verstellgeschwindigkeit gestellt. Vor allem bei der Verwendung gasförmiger Druckmedien kann nur über schnelle Umbelüftungen der Verdrängerräume des Antriebes eine zufriedenstellende Genauigkeit und Laststeifigkeit erzielt werden. Die beweglichen Schieber der bekannten stetigen Ventile sind jedoch relativ schwer, so daß zur schnellen Verstellung hohe Beschleunigungskräfte notwendig sind. Zudem besitzen Linearschieberventile eine relativ große Angriffsfläche für Strömungskräfte, die bei der Drosselung oder Umlenkung von Strömen immer entstehen und das Ventil zu schließen versuchen. Auch diese relativ hohen Kräfte müssen vom elektromechanischen Wandler aufgebracht werden. Es existieren zwar einige Lösungsansätze zur Kompensation der Strömungskräfte an Linearschiebern durch spezielle konstruktive Maßnahmen, jedoch sind diese Maßnahmen alle fertigungstechnisch aufwendig und meistens nicht über den ganzen Arbeitsbereich des Ventils wirksam.

Um eine ausreichend große Verstellgeschwindigkeit zu erzielen, werden relativ schwere Ventile mit starken und damit entsprechend schweren und großen elektromechanischen Wandlern verwendet.

Soweit die Aufgabe mit mehrstufigen Ventilen gelöst ist, ergeben sich zusätzliche Probleme hinsichtlich des erhöhten Bauaufwandes und der Empfindlichkeit gegen Verschmutzung.

Ein Ventil der eingangs genannten Art ist aus der DE-A-31 49 306 bekannt. Es handelt sich dabei um ein mit einem dünnwandigen Axialschieber als Stellglied ausgestattetes Mehrwegeventil. Das einstückige Stellglied ist in eine Anzahl zylindrischer Abschnitte unterteilt und voll vom zu steuernden Medium umströmt. Dabei wirken starke Strömungskräfte auf die von der Mantelfläche des Stellgliedes gebildeten Ringflächen.

Aus der GB-A-771,562 ist ein Dreiwegeventil für zwei definierte Schaltstellungen bekannt, in denen ein Hochdruckleistungssystem ohne Druckverlust von einer auf eine andere Sicherheitseinrichtung (Sicherheitsventil, Berstscheibe oder dgl.) umschaltbar ist. Es ist kein Stetig-Wegeventil.Sein Stellglied ist nicht dafür vorgesehen, kontinuierlich verdreht zu werden, sondern nimmt entweder die eine oder die andere Schaltstellung ein. Das Stellglied besteht aus einem geschlitzten Ring, der unter radialer Spannung an der Gehäuseinnewandung anliegt und Öffnungen aufweist, die den zugeordneten Leitungsöffnungen des Gehäuses entsprechen. Dabei ist die der Zuleitung zugeordnete Öffnung im Stellglied so groß ausgebildet, daß sie diese Leitung nie absperrt.

Mit einem solchen Ventil, das erhebliche Reibungskräfte verursacht, ist es nicht möglich, die der Erfindung zugrunde liegende Aufgabe zu lösen. Der Schlitz im Stellglied erschwert dessen Drehbarkeit und wäre bei einem Steti-Wegeventil, wie es die Erfindung vorsieht, fehl am Platze.

Der Erfindung liegt die Aufgabe zugrunde, ein Stetig-Wegeventil der eingangs genannten Art so auszubilden, daß es nur geringe Antriebskräfte benötigt, so daß ein vergleichsweise kleiner elektromechanischer Wandler in der Lage ist, relativ große fluidische Leistungen unmittelbar, d.h. ohne Zwischenschaltung eines fluidischen Verstärkers, zu steuern. Zu diesem Zweck soll das Stetig-Wegeventil druckausgeglichen sein, um Reibungskräfte zwischen dem Gehäuse und dem Stellglied weitestgehend zu vermeiden. Im übrigen soll es fertigungstechnisch einfach ausgebildet und sehr schnell und stetig verstellbar sein sowie bezogen auf seine Durchflußleistung klein bauen, d.h. eine günstige Volumenausnutzung aufweisen.

Die Lösung dieser Aufgabe besteht erfindungsgemäß in den kennzeichnenden Merkmalen des Anspruches 1 für die Ausbildung als Drehschieberventil und in den kennzeichnenden Merkmalen des Anspruches 3 für die Ausbildung als Linearschieberventil.

Die Anordnung diametral einander gegenüberliegender Gehäuseöffnungen für jeweils den gleichen Fluidstrom bei der Drehschieberausführung sowie der das Stellglied umgebenden Ringnuten bei der Linearschieberausführung bewirkt eine erhebliche Reduzierung der Reibungskräfte, so, daß nur sehr geringe Antriebskräfte am Stellglied erforderlich sind, so daß es z.B. möglich ist, an der Stellgliedachse unmittelbar einen elektrischen Antrieb anzubringen. Dies gilt sowohl für Drehschieberausbildungen als auch für Linearschieberventile.

In den Unteransprüchen sind vorteilhafte weitere Ausgestaltungen des erfindungsgemäßen Stetig-Wegeventiles angegeben. Nachstehend ist die Erfindung anhand von in der Zeichnung dargestellten Ausführungsbeispielen näher erläutert. Es zeigen:
Fig.1 ein Drehschieberventil im Längsschnitt
Fig.2 einen Querschnitt nach der Linie II-I in Fig.1
Fig.3 ein Mehrkammer-Drehschieberventil im Längsschnitt
Fig.4 einen Längsschnitt durch ein Linearschieberventil und
Fig.5 einen Querschnitt nach der Linie V-V in Fig.4.

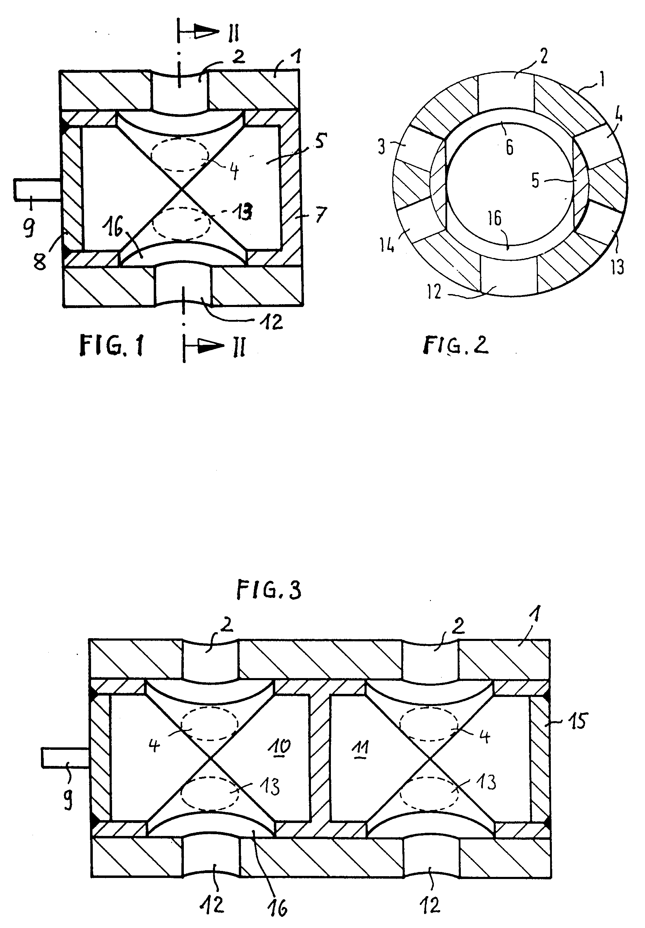

Die Fig. 1 und 2 zeigen ein Drehschieberventil als 3/3-Wegeventil. Es besteht aus einem zylindrischen Gehäuse 1 mit einander diametral gegenüberstehenden Zugangsöffnungen 2,12 und zwei Paaren diametral gegenüberstehender Abgangsöffnungen 3,13 und 4,14 sowie aus einem ebenfalls zylindrischen, im Gehäuse 1 drehbar gelagerten Stellglied 5 mit zwei Durchgangsöffnungen 6, 16 die den Zu- und Abgangsöffnungen 2,12;3,13; und 4,14 zugeordnet sind.

Das Stellglied 5 ist als sehr dünnwandiger, an den Stirnseiten 7,8 geschlossener Hohlkörper ausgebildet. Mit 9 ist eine Antriebsachse für einen Drehantrieb bezeichnet.

Je nach der gegebenen Drehwinkelstellung des Stellgliedes 5 ermöglicht dieses eine Weiterleitung des durch die Zugangsöffnungen 2,12 angebotenen Mediums durch die Abgangsöffnungen 3,13 oder 4,14. Infolge der extrem dünnen Wände des Stellgliedes ergeben sich nur vernachlässigbar kleine Strömungskräfte in Umfangsrichtung an den Durchgangsöffnungen 6,16 so daß sich das Stellglied 5 leicht und rasch umschalten läßt.

Fig.3 zeigt eine Ausführungsform eines Drehschieberventils, bei dem durch Drehung eines Stellgliedes 15 mehrere Zu- und Abgangsleitungen 2,12 bzw. 3,13 oder 4,14 synchron bedient werden können. Zu diesem Zweck ist das Stellglied in mehrere, geschlossene Kammern 10,11 unterteilt, wobei jedem Fluidstrom eine der Kammern 10,11 zugeordnet ist. Im übrigen ist dieses Ventil wie dasjenige der Fig.1 und 2 aufgebaut.

Bei den Ventilen der Fig.1 bis 3 sind, um höhere Druckdifferenzen zu vermeiden, die relativ hohe Reibungskräfte zwischen dem Stellglied 5 bzw.15 und dem Gehäuse 1 verursachen können, die Zu- und Abgangsöffnungen 2, 3, und 4 sowie 12,13,14 für gleichartige Strömungen einander paarweise diametral gegenüberstehend angeordnet sind. Dementsprechend weist das Stellglied 5 bzw. 15 zwei zugeordnete Durchgangsöffnungen 6,16 auf, die die Zugangsöffnungen 2,12 jeweils mit dem einen oder anderen Paar Abgangsöffnungen 3,13 bzw 4, 14 verbinden.

Da bei dieser Ausführungsform keine resultierenden Druckkräfte auf das Stellglied 15 in radialer Richtung wirken, ist diese Ausführungsform druckausgeglichen und auch für hohe Druckdifferenzen geeignet.

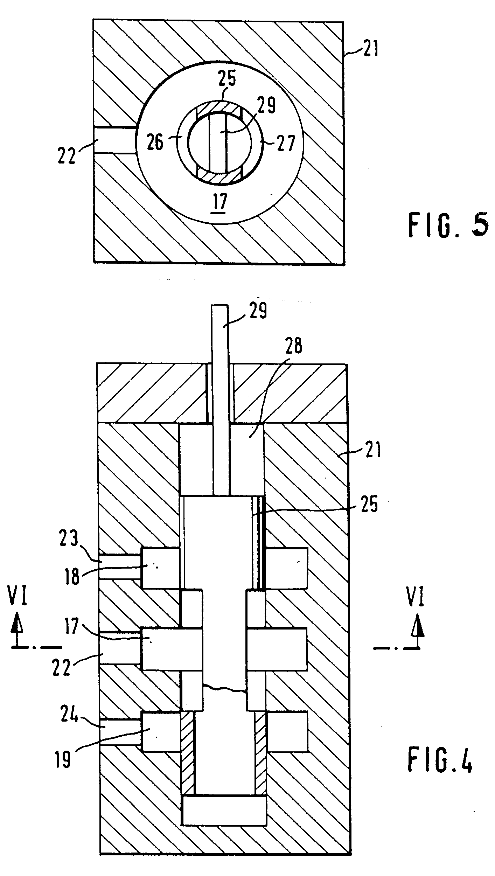

Die Fig. 4 und 5 zeigen ein druckausgeglichenes Linearschieberventil. In einem Gehäuse 21 sind Zu- und Abgangsöffnungen 22, 23, 24 vorgesehen. Im Gehäuse 21 ist ein Stellglied 25 längsgeführt angeordnet. Es ist kürzer als die vom Gehäuse 21 umschlossene Kammer 28 und weist zwei einander gegenüberliegende Durchgangsöffnungen 26,27 auf. Diese sind in axialer Richtung als Schlitze ausgeführt und reichen soweit, daß sie die wahlweise Verbindung der Zu- und Abgangsöffnungen 22, 23 bzw. 22, 24 ermöglichen.

Die Zu- und Abgangsöffnungen 22, 23 und 24 münden in gehäuseseitigen Ringnuten 17, 18, 19, die das Stellglied umfassen und damit druckentlasten.

Das Stellglied 25 ist an seinen Stirnseiten offen. An der einen Stirnseite ist es mit einer Antriebsstange 29 verbunden, die von außerhalb des Gehäuses 21 betätigbar ist.

Je nach der axialen Stellung des Stellgliedes 25 strömt Medium durch die Zugangsöffnung 22 und die Ausnehmung 17 in das Innere des Stellgliedes 25 und von dort durch die Ausnehmung 18 bzw. 19 zu den Abgangsöffnungen 23 oder 24. Die axiale Verstellung des Stellgliedes erfordert extrem kleine Kräfte. Wegen der völligen Umströmung des Stellgliedes im Bereich der Ausnehmungen 17,18 und 19 ist auch ein völliger Druckausgleich gegeben.

## Patentansprüche

1. Stetig-Wegeventil zur Einstellung vorbestimmter Volumenströme oder Drücke in hydraulischen oder pneumatischen Steuer- und/oder Regelsystemen zur direkten, schnellen, genauen und stufenlosen Steuerung fluidischer Leistungen, bestehend aus einem zylindrischen Gehäuse (1) mit einer Vielzahl von in seiner Mantelfläche befindlichen Zu- und Abgangsöffnungen (2,12 bzw. 3,13 oder 4,14) sowie einem im Gehäuse (1) bewegbaren, angetriebenen Stellglied (5,15) mit in seiner Mantelfläche befindlichen Einrichtungen (6,16) zur wahlweisen Verbindung der Zu- und Abgangsöffnungen (2,12; bzw. 3,13 oder 4,14) des Gehäuses (1),
**dadurch gekennzeichnet**,
daß das Stellglied (5,15) ein dünnwandiger, zylindrischer Hohlkörper ist, dessen Einrichtungen (6,16) zur Verbindung der Zu- und Abgangsöffnungen (2,12 bzw. 3,13 oder 4,14) des Gehäuses (1) aus einer Anzahl diesen zugeordneten Durchgangsöffnungen (6,16) bestehen, die eine ausschließliche Durchströmung des Stellgliedes (5,15) gestatten,
daß das Stellglied (5,15) im Gehäuse (1) drehbar gelagert ist und einen Drehantrieb aufweist und
daß jeweils Zu- und Abgangsöffnungen (2,12; bzw. 3,13 oder 4,14) des Gehäuses (1) für gleichartige angeschlossene Leitungen im Gehäuse (1) paarweise diametral einander gegenüberstehend angeordnet sind.

2. Stetig-Wegeventil nach Anspruch 1, **dadurch gekennzeichnet,** daß das Stellglied (5,15) in axialer Richtung mehr als eine Kammer (10,11) aufweist und daß jeder der Kammern (10,11) ein Satz Zu- und Abgangsöffnungen (2,12; bzw. 3,13 oder 4,14) im Gehäuse (1) sowie ein Satz Durchgangsöffnungen (6,16) im Stellglied (15) zur Steuerung je eines Fluidstromes zugeordnet sind.

3. Stetig-Wegeventil, zur Einstellung vorbestimmter Volumenströme oder Drücke in hydraulischen oder pneumatischen Steuer- und/oder Regelsystemen zur direkten, schnellen, genauen und stufenlosen Steuerung fluidischer Leistungen, bestehend aus einem Gehäuse (21) mit einer Vielzahl von Zu- und Abgangsöffnungen (22 bzw. 23 oder 24) sowie einem im Gehäuse (21) bewegbaren, als dünnwandiger Hohlkörper ausgebildeten Stellglied (25) mit Einrichtungen (26,27) zur wahlweisen Verbindung der Zu- und Abgangsöffnungen (22 bzw. 23 oder 24) des Gehäuses (21),
**dadurch gekennzeichnet**,
daß das Gehäuse (21) stirnseitig geschlossen ist und eine fluiddichte Kammer (28) bildet, daß das Stellglied (25) ein volldurchströmbarer, stirnseitig offener Hohlkörper ist, der kürzer als die Kammer (28) und in dieser linear verschiebbar angeordnet ist und einen Axialantrieb (29) aufweist, daß seine Einrichtungen zur Verbindung der Zu- und Abgangsöffnungen (22,23,24) des Gehäuses (21) ausschließlich aus einer Anzahl diesen zugeordneten, paarweise einander gegenüberliegende Durchgangsöffnungen (26,27) bestehen, die eine ausschließliche Durchströmung des Stellgliedes (25) gestatten,
daß jeweils Zu- und Abgangsöffnungen (22,23,24) des Gehäuses (21) in gehäuseseitige, das Stellglied (25) umfassende Ringnuten (17,18,19) münden, die das Stellglied (25) vollständig umschließen.

4. Stetig-Wegeventil nach einem der Ansprüche 1 bis 3, **dadurch gekennzeichnet**, daß die Zu- und Abgangsöffnungen (2,3,4; 12,13,14; 22,23,24) des Gehäuses (1,21) einerseits und/oder die Durchgangsöffnungen (6,16,26) des Stellgliedes (5,15,25) andererseits als Axialschlitze ausgebildet sind.

## Claims

1. Continuous directional valve for setting predetermined volumetric flows or pressures in hydraulic or pneumatic controlling and/or regulating systems for the direct, rapid, accurate and stepless control of fluidic outputs, comprising a cylindrical housing (1) having a plurality of inlet and outlet apertures (2,12 and 3,13 or 4,14 respectively) provided in its surface and a driven control member (5,15), which is displaceable in the housing (1) and has means (6,16), which are situated in its surface for the selective connection of the inlet and outlet apertures (2,12; and 3,13 or 4,14 respectively) of the housing (1), characterised in that the control member (5,15) is a thin-walled, cylindrical hollow body, the means (6,16) of which for connecting the inlet and outlet apertures (2,12 and 3,13 or 4,14 respectively) of the housing (1) comprise a number of through-apertures (6,16), which are associated with said inlet and outlet apertures and permit an exclusive flow of fluid through the control member (5,15), in that the control member (5,15) is rotatably mounted in the housing (1) and has a rotary drive, and in that inlet and outlet apertures (2,12; and 3,13 or 4,14 respectively) of the housing (1) for similar connected leads are disposed in pairs in the housing (1) diametrically opposite one another.

2. Continuous directional valve according to claim 1, characterised in that the control member (5,15) has, in the axial direction, more than one chamber (10,11), and in that each of the chambers (10,11) has associated therewith a set of inlet and outlet apertures (2,12; and 3,13 or 4,14 respectively) in the housing (1) and a set of through-apertures (6,16) in the control member (15) for controlling a respective flow of fluid.

3. Continuous directional valve for setting predetermined volumetric flows or pressures in hydraulic or pneumatic controlling and/or regulating systems for the direct, rapid, accurate and stepless control of fluidic outputs, comprising a housing (21) having a plurality of inlet and outlet apertures (22 and 23 or 24 respectively) and a control member (25), which is displaceable in the housing (21) and is in the form of a thin-walled hollow body, said control member having means (26,27) for the selective connection of the inlet and outlet apertures (22 and 23 or 24 respectively) of the housing (21), characterised in that the housing (21) is closed at the front end and forms a fluid-tight chamber (28), in that the control member (25) is a fully traversable hollow body, which is open at the front end and is shorter than the chamber (28), said hollow body being disposed in said chamber in a linearly displaceable manner and having an axial drive (29), in that its means for connecting the inlet and outlet apertures (22,23,24) of the housing (21) exclusively comprise a number of through-apertures (26,27), which are associated with said inlet and outlet apertures and are situated opposite one another in pairs, such through-apertures permitting an exclusive flow of fluid through the control member (25), in that inlet and outlet apertures (22,23,24) of the housing (21) extend into annular grooves (17,18,19) respectively at the housing end, which grooves encompass the control member (25) and surround the control member (25) completely.

4. Continuous directional valve according to one of claims 1 to 3, characterised in that the inlet and outlet apertures (2,3,4; 12,13,14; 22,23,24) of the housing (1,21), on the one hand, and/or the through-apertures (6,16,26) of the control member (5,15,25), on the other hand, are axial slots.

## Revendications

1. Distributeur à plusieurs voies pour introduire des débits volumiques ou des pressions prédéterminés dans les circuits de commande et/ou de réglage hydrauliques ou pneumatiques afin de permettre une commande directe rapide, précise et continue des puissances fournies par un fluide, ledit distributeur étant constitué d'un corps de vanne cylindrique (1) avec un grand nombre d'orifices d'entrée et de sortie (2, 12 ou 3, 13 ou 4, 14) se trouvant dans sa surface cylindrique ainsi que d'un élement de réglage (5, 15) entraîné et mobile dans le corps de vanne (1), avec des dispositifs (6, 16) se trouvant dans sa surface cylindrique pour assurer la connexion au choix des orifices d'entrée et de sortie (2, 12 ou 3, 13 ou 4, 14) du corps de vanne (1),
caractérisé
en ce que l'élément de réglage (5, 15) est un corps creux cylindrique à parois minces dont les dispositifs (6, 16) pour assurer la connexion des orifices d'entrée et de sortie (2, 12 ou 3, 13 ou 4, 14) du boîtier (1) sont constitués d'un certain nombre d'orifices de passage correspondant à ceux-ci et permettant un écoulement exclusif à travers l'élément de réglage (5, 15),
en ce que l'élément de réglage (5, 15) est monté dans le corps de vanne (1) avec possibilité de rotation et présente une commande de rotation, et
en ce que les orifices d'entrée et de sortie (2, 12 ou 3, 13 ou 4, 14) du corps de vanne (1) pour les conduites identiques raccordées dans le corps de vanne (1) sont disposés par paires et diamétralement opposés les uns aux autres.

2. Distributeur à plusieurs voies selon la revendication 1, caractérisé en ce que l'élément de réglage (5, 15) présente, en direction axiale, plus d'une chambre (10, 11) et en ce que, à chacune des chambres (10, 11) correspond un ensemble d'orifices d'entrée et de sortie (2, 12 ou 3, 13 ou 4, 14) dans le corps de vanne (1) ainsi qu'un ensemble d'orifices de passage (6, 16) dans l'élément de réglage (5, 15) pour le réglage d'un courant de fluide.

3. Distributeur à plusieurs voies pour régler des débits volumiques ou des pressions déterminés dans les circuits de commande et/ou de régulation hydrauliques ou pneumatiques pour commander de manière directe, rapide, précise et continue des puissances fournies par un fluide, ledit distributeur étant constitué d'un corps de vanne (1) avec plusieurs orifices d'entrée et de sortie (22 ou 23 ou 24) ainsi que d'un élément de réglage (25) constitué d'un corps creux à parois minces et pouvant se déplacer dans le corps de vanne (21) avec des dispositifs (26, 27) pour assurer la connexion au choix des orifices d'entrée et de sortie (22 ou 23 ou 24) du corps de vanne (21),
caractérisé
en ce que le corps de vanne (21) est fermé sur une face frontale et constitue une chambre (28) étanche aux fluides, en ce que l'élément de réglage (25) est un corps creux ouvert sur une face frontale et complètement entouré par le fluide, qui est plus court que la chambre (28) et qui est monté de manière à coulisser linéairement dans celle-ci et qui présente une commande axiale (29), en ce que ces dispositifs pour assurer la connexion des orifices d'entrée et de sortie (22, 23, 24) du corps de vanne (21) sont composés exclusivement d'un certain nombre d'orifices de passage (26, 27) opposés par paires les uns aux autres et correspondant à ces orifices qui permettent l'écoulement exclusif à travers l'élément de réglage (25),
en ce que les orifices d'entrée et de sortie (22, 23, 24) du corps de vanne (21) débouchent dans des rainures annulaires (17, 18, 19) entourant l'élément de réglage (25) du côté du corps de vanne et entourant complètement l'élément de réglage (25).

4. Distributeur à plusieurs voies selon l'une des revendications 1 à 3, caractérisé en ce que les orifices d'entrée et de sortie (2, 3, 4; 12, 13, 14; 22, 23, 24) du corps de vanne (1, 21) d'une part et/ou les orifices de passage (6, 16, 26) de l'élément de réglage (5, 15) d'autre part sont constitués par des fentes axiales.
